# EUROPEAN PATENT APPLICATION

(11) **EP 2 600 459 A1**
(43) Date of publication of application: **05.06.2013**
(21) Application number: 11812150.8
(22) Date of filing: 20.05.2011
(51) Int. Cl.: H01M 10/054, H01M 4/136, H01M 4/1397, H01M 4/58, H01M 10/0562, H01M 10/0565, H01M 10/0585

(54) **SOLID SECONDARY BATTERY USING SILICON COMPOUND AND METHOD FOR MANUFACTURING SAME**

(30) Priority: 27.07.2010 JP 2010168403
(71) Applicant: Ichimura, Fukuyo, Iwata-shi, Shizuoka 437-1203 (JP)
(72) Inventor: ICHIMURA, Shoji, Iwata-shi Shizuoka 437-1203 (JP); ICHIMURA, Fukuyo, Iwata-shi Shizuoka 437-1203 (JP)
(74) Representative: von Füner, Nicolai
(86) International application number: PCT/JP2011/061643
(87) International publication number: WO 2012/014556

(57) **Abstract**

An object of the invention is to provide a constitution of a solid type secondary battery manufactured at low cost and rarely causes an environmental problem by employing a silicon compound in a cathode and an anode and to provide a process for manufacturing the same. The solid type secondary battery can attain the above object by employing silicon carbide having a chemical formula SiC in a positive electrode 3, silicon nitride having a chemical formula of Si₃N₄ in a negative electrode 5 and a cationic or anionic nonaqueous electrolyte 4 between the positive electrode 3 and the negative electrode 5.

## Description

### Field of the Invention

The present invention relates to a solid type secondary battery employing a silicon compound in a positive electrode and a negative electrode and a nonaqueous electrolyte between the two electrodes, and a method for manufacturing the same.

### BACKGROUND OF THE INVENTION

Recently, with the spread of portable machines such as personal computers and mobile phones, demand for a secondary battery serving as a power source for the machines has been rapidly increasing.

A typical example of such a secondary battery is a lithium battery, which uses lithium (Li) in a negative electrode and e.g., a β-manganese oxide (MnO₂) or fluorocarbon ((CF)ₙ) in a positive electrode.

In particular, recently, extraction (flow out) of metal lithium can be prevented by interposing a nonaqueous electrolyte between a positive electrode and a negative electrode, causing wide spread of lithium batteries.

However, lithium is quite expensive. Besides, when a lithium battery is finally disposed, metal lithium flows out at a disposal site. This is inevitably and extremely unfavorable situation for the environment.

In contrast, when silicon (Si), which is intrinsically a semiconductor, is used as a material for an electrode, Si is extraordinary inexpensive compared to lithium and even if a battery is finally disposed, silicon is buried in the ground and causes no environmental problems such as metal-lithium flow out.

Taking into account the circumstances, recently, attempts have been made to employ silicon as an electrode material for a secondary battery.

Note that, Publication of Unexamined Patent Application No. H 11-007979 employs, as a negative electrode, a metal silicon compound (SiMx: x1 > 0, where M represents one or more metal elements including lithium, nickel, iron, cobalt, manganese, calcium and magnesium) (claim 1).

Similarly, also in Publication of Unexamined Patent Application No. 2001-291513, as a negative electrode, an alloy of cobalt or nickel and iron (Co or Ni-Si) is employed (Examples, Table 1).

However, in these conventional technologies, it is doubtful whether silicon plays a major role of discharging electrons or cations at a negative electrode.

Besides, in these conventional technologies in which silicon is employed as a positive electrode and a negative electrode, Si does not always play a role for transferring electrons or anions and cations.

As described above, the conventional technologies in which a silicon compound is employed in both electrodes do not always propose a constitution in which silicon can play a major role for transferring electrons or anions and cations.

### PATENT LITERATURE

PATENT LITERATURE 1: Publication of Unexamined Patent Application No. H 11-007979
PATENT LITERATURE 2: Publication of Unexamined Patent Application No. 2001-291513

### SUMMARY OF THE INVENTION

### PROBLEMS TO BE SOLVED BY THE INVENTION

An object of the present invention is to provide a constitution of a solid type secondary battery employing a silicon compound in a cathode and an anode, manufactured at low cost and rarely causing environmental problems, and to provide a process for manufacturing the same.

### SOLUTIONS TO PROBLEMS

Basic constitutions of the present invention to attain the aforementioned object are as follows:
1. A solid type secondary battery comprising silicon carbide having a chemical formula of SiC as a positive electrode, silicon nitride having a chemical formula of Si₃N₄ as a negative electrode, and a nonaqueous electrolyte, between the positive electrode and the negative electrode, formed of any one of ion exchange resins of polymers having a cationic sulfonic acid group (-SO₃H) or carboxyl group (-COOH), or an anionic quaternary ammonium group (-N(CH₃)²C₂H₄OH) or substituted amino group (-NH(CH₃)²) as a binding group, in which, in charging, a silicon cation (Si⁺) is generated at the positive electrode and a silicon anion (Si⁻) is generated at the negative electrode;
2. A solid type secondary battery comprising silicon carbide having a chemical formula of SiC as a positive electrode, silicon nitride having a chemical formula of Si₃N₄ as a negative electrode, and a nonaqueous electrolyte, between the positive electrode and the negative electrode, formed of an inorganic ion exchange substance of tin chloride (SnCl₃), zirconium magnesium oxide solid solution (ZrMgO₃), zirconium calcium oxide solid solution (ZrCaO₃), zirconium oxide (ZrO₂), silicon-βalumina (Al₂O₃), monoxide nitrogen silicon carbide (SiCON) or phosphoric acid zirconium silicon (Si₂Zr₂PO), in which, in charging, a silicon cation (Si⁺) is generated at the positive electrode and a silicon anion (Si⁻) is generated at the negative electrode; and
3. A method for manufacturing the solid silicon ion secondary battery described in said items 1 and 2, comprising the steps of:
   (1) forming a positive electrode current collecting layer by sputtering a metal on a substrate,
   (2) forming a positive electrode layer by vacuum vapor deposition of silicon carbide (SiC) on the positive electrode current collecting layer,
   (3) forming a nonaqueous electrolyte layer by coating of the positive electrode layer obtained in said step (2),
   (4) forming a negative electrode layer by vacuum vapor deposition of silicon nitride (Si₃N₄) on the nonaqueous electrolyte layer obtained in said step (3), and
   (5) forming a negative electrode current collecting layer by sputtering a metal.

### ADVANTAGES OF THE INVENTION

The secondary battery of the present invention according to any one of the basic constitutions of the aforementioned items 1, 2 and 3 provides an electromotive force virtually comparable to that of a secondary battery using lithium as a negative electrode, at a low cost. Besides, even if the secondary battery is disposed, environmental problems do not occur, unlike a lithium battery.

In addition, in charging, silicon cation (Si⁺) generates at a positive electrode, whereas silicon anion (Si⁻) generates at a negative electrode. Therefore, any one of the cationic and anionic electrolytes can be preferably employed as a nonaqueous electrolyte.

### BRIEF DESCRIPTION OF THE DRAWINGS

Fig. 1 shows sectional views of solid type secondary batteries of the present invention.
Fig. 1(a) shows a plate-form laminate.
Fig. 1(b) shows a cylindrical laminate.
Fig. 2 is a graph showing charge-discharge varied with time and further showing a change in voltage after charge-discharge cycle is repeated 3000 times in Example.

### DETAILED DESCRIPTION OF THE INVENTION

In the first place, a basic principle of the present invention will be described.

As described in the aforementioned basic constitution (1), the most stable compound (SiC) of silicon carbides is employed in a positive electrode and the most stable compound (Si₃N₄) of silicon nitrides is employed in a negative electrode.

In charging at a positive electrode, the oxidation number of silicon easily changes compared to that of carbon, and further, the stable state of silicon next to a quadrivalent is a divalent. From this, the following chemical reaction takes place.

2SiC → SiC₂ + Si⁺ + e⁻

Conversely, in discharging, the following chemical reaction takes place.

SiC₂ + Si⁺ + e⁻ → 2SiC

At the anode, silicon nitride changes from the most stable state (Si₃N₄) to the next stable state (Si₂N₃) of the compound, in which silicon changes a quadrivalent to a trivalent and nitrogen changes a trivalent to a divalent. In short, the following chemical reaction formula is set up.

3Si₃N₄ + e⁻ → 4Si₂N₃ + Si⁻

Conversely, in discharging, the following chemical reaction takes place.

4Si₂N₃ + Si⁻ → 3Si₃N₄ + e-

Accordingly, if charge and discharge are integrated, the following chemical reaction takes place:

2SiC + 3Si₃N₄ ⇄ SiC₂ + 4Si₂N₃ + Si + Si⁻

Note that, the above general reaction formula can be estimated with the highest probability; however, there is a possibility that reaction formulas may be present based on other charge/discharge mechanisms. Accurate determination is left to future investigation.

Usually, the compound represented by SiC and the compound represented by Si₃N₄ both present a crystal structure. If a positive electrode and a negative electrode are formed by a conventional process using e.g., plasma discharge, silicon carbide (compound represented by SiC) having a crystal structure and silicon nitride (compound represented by Si₃N₄) having a crystal structure come to be formed.

However, in order to easily and smoothly perform charge/discharge accompanying generation of silicon ions (Si⁺ and Si⁻), it is preferable that each of the compounds described above is not a crystal structure but a non-crystalline structure, that is, an amorphous structure.

Therefore, as described later, a method of laminating a positive electrode and a negative electrode by vacuum vapor deposition is preferably employed.

In the present invention, since silicon cations (Si⁺) are formed at a positive electrode and silicon anions (Si-) are formed at a negative electrode upon charging and either one of them may be transferred between the two electrodes, both of a cationic electrolyte and an anionic electrolyte can be employed as an ion exchange resin.

In addition, the space between the positive electrode and the negative electrode is partitioned into two spaces and a cationic electrolyte may be used in one of them (for example, the upper side) and an anionic electrolyte may be used in the other side (for example, the lower side). In this manner, both cationic electrolyte and anionic electrolyte can be employed.

As the electrolyte of the present invention, a nonaqueous electrolyte in an immobilized state is employed. This is because, the nonaqueous electrolyte in an immobilized state can join the positive electrode and the negative electrode in a stable state; at the same time, if the nonaqueous electrolyte is formed in the form of thin film, the positive electrode and the negative electrode are brought into close contact with each other, enabling efficient electric conduction.

As the nonaqueous electrolyte, both an ion exchange resin in the form of a polymer and an ion exchange inorganic compound in the form of a metal oxide can be employed.

As the ion exchange resin, any one of the polymers having a cationic sulfonic acid group (-SO₃H) or carboxyl group (-COOH), an anionic quaternary ammonium group (-N (CH₃)₂C₂H₄OH) or substituted amino group (-NH (CH₃)₂), as a binding group, can be employed.
Note that, according to experience of the inventors, polyacrylamidomethylpropane sulfonic acid (PAMPS) having a sulfonic acid group (-SO₃H) can be preferably employed since it can smoothly transfer silicon negative ions (Si⁻) without difficulty.

However, when an ion exchange resin in the form of a polymer is employed, if the space between the positive electrode and the negative electrode is filled with the ion exchange resin alone, appropriate voids for smoothly transferring silicon ions (Si⁺ + or Si⁻) sometimes cannot be formed.

To deal with such a case, an embodiment of employing a polymer alloy having a crystal structure, which is formed by blending an ion exchange resin (polymer) and another crystalline polymer, as a nonaqueous electrolyte, is preferably employed.

To successfully blend an ion exchange resin (polymer) and another crystalline polymer, since the ion exchange resin has a polarity, a measure must be taken not to diminish the polarity of the ion exchange resin (polymer) by the crystalline polymer.

In blending of polymers as mentioned above, the propriety of the blending can be predicted with an adequate provability, based on a difference between solubility parameters (SP value) that the ion exchange resin (polymer) and the crystalline polymer respectively have as well as numerical values of χ parameter based on the binding of the solubility parameters.

As "another crystalline polymer", e.g., atactic polystyrene (AA), an acrylonitrile-styrene copolymer (AS) or an atactic polystyrene-acrylonitrile-styrene copolymer (AA-AS) is preferable since it is easily blended with an ion exchange resin (polymer) and maintains crystallinity.

For a polymer alloy, in which two polymers are mutually blended, to maintain a crystal structure, it is necessary to consider the amount ratio of the ion exchange resin (polymer) and another crystalline polymer. A specific ratio (numerical value) varies depending upon the types of ion exchange resin (polymer) and another crystalline polymer.
However, when the polarity of the ion exchange resin (polymer) is high, the weight ratio of "another crystalline polymer" can be increased to more than 1/2 of the total.

When cationic polyacrylamidomethylpropane sulfonic acid (PAMPS) is employed as a cationic ion exchange resin (polymer), and an atactic polystyrene (AA), an acrylonitrile-styrene copolymer (AS) or an atactic polystyrene-acrylonitrile-styrene copolymer (AA-AS) as described above is employed as "another crystalline polymer", the weight ratio of the former one to the latter one is appropriately about 2:3 to 1:2.

The nonaqueous electrolyte is not limited to ion exchange resins mentioned above. Of course, an inorganic ion exchange substance can be employed. Typical examples of the inorganic ion exchange substance may include tin chloride (SnCl₃), zirconium magnesium oxide solid solution (ZrMgO₃), zirconium calcium oxide solid solution (ZrCaO₃), zirconium oxide (ZrO₂), silicon-βalumina (Al₂O₃), monoxide nitrogen silicon carbide (SiCON) and phosphoric acid zirconium silicon (Si₂Zr₂PO).

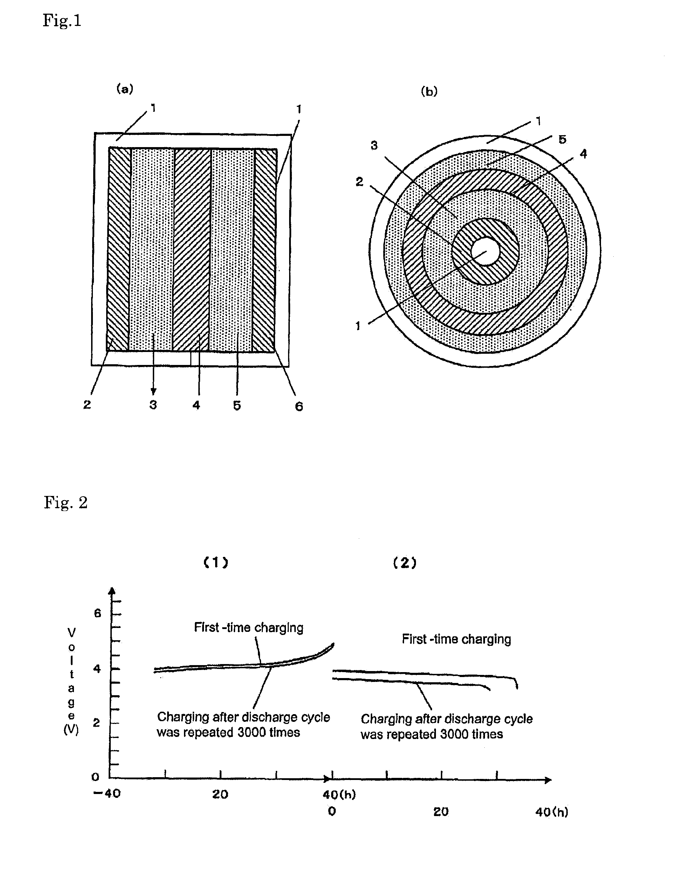

In the solid type secondary battery of the present invention, the shape and arrangement of the cathode and the anode are not particularly limited.
However, as a typical example, plate-form laminate arrangement as shown in FIG. 1 (a) and cylindrical arrangement as shown in FIG. 1 (b) can be employed.

As shown in FIG. 1(a), (b), in a solid type secondary battery actually used, a substrate 1 is provided on the both sides of a positive electrode 3 and a negative electrode 5 and connected to the positive electrode 3 and the negative electrode 5 respectively with a positive electrode current collecting layer 2 and a negative electrode current collecting layer 6 interposed between them.

The Example discharge voltage between the cathode and the anode varies depending upon the magnitude of charging voltage and the internal resistance within the electrodes. In the secondary battery of the present invention, as described in Example later, design can be sufficiently made such that if a charging voltage is set to 4 to 5.5 V, a discharge voltage can be maintained at 4 to 3.5 V.

The amount of current flowing between the electrodes can be set at a predetermined value in advance before charging; however, as described later in Example, design can be sufficiently made such that a discharge voltage can be maintained at 4 to 3.5 V by changing a charging voltage to 4 to 5.5 V by setting the current density per unit area (1 cm²) to about 1.0 A.

A method for manufacturing solid type secondary batteries as shown in FIG. 1(a), (b) is as follows.
(1) Formation of the positive electrode current collecting layer 2
   On the substrate 1, a metal powder is deposited by sputtering to form the positive electrode current collecting layer 2.
   As a typical example of the substrate 1, quartz glass is preferably employed. As the metal, a precious metal such as platinum is frequently used.
(2) Formation of the positive electrode active layer
   In the state where the peripheral portion of the positive electrode current collecting layer 2 is masked, silicon carbide (SiC) is laminated by vacuum vapor deposition.
(3) Formation of nonaqueous electrolyte layer 4
   To the positive electrode active layer, a nonaqueous electrolyte layer 4 is formed by coating to laminate the electrolyte layer.
(4) Formation of negative electrode active layer
   In the state where the peripheral portion of the nonaqueous electrolyte layer 4 is masked, silicon nitride (Si₃N₄) is laminated on the nonaqueous electrolyte layer 4 by vacuum vapor deposition.
(5) Formation of negative electrode current collecting layer 6
   The periphery of the negative electrode current collecting layer 6 and the electrolyte layer are masked and a metal powder is deposited by sputtering to laminate the negative electrode current collecting layer 6.

The negative electrode current collecting layer 6 is often formed by using platinum (Pt).

Needless to say, the order of steps (1) and (5) may be exchanged and the order of steps (2) and (4) may be exchanged to first form the structure on the side of the negative electrode 5 and then the structure on the side of the positive electrode 3 is formed. Such manufacturing steps can be employed.

In the steps (1) to (5), when a flat-plate laminate structure is employed, a full solid silicon secondary battery can be formed of a plate laminate as shown in FIG. 1 (a).

In contrast, in the above steps, when a cylindrical laminate structure is formed on a cylindrical substrate 1, a full solid silicon secondary battery can be formed of a cylindrical laminate as shown in FIG. 1 (b).

### EMBODIMENT

A solid type secondary battery of a plate-form laminate as shown in FIG. 1 (a) was manufactured by providing a positive electrode 3 and a negative electrode 5 having a thickness of 150 µm and a diameter of 20 mm and providing a nonaqueous electrolyte layer 4 of 100 µm thick, which was obtained by mutually blending a polyacrylamidomethylpropane sulfonic acid (PAMPS) (polymer) and another crystalline polymer such as atactic polystyrene (AA), acrylonitrile-styrene copolymer (AS) or an atactic polystyrene-acrylonitrile-styrene copolymer (AA-AS), in a weight ratio of 1:1. In this way, a solid type silicon secondary battery of the present invention was manufactured.

The secondary battery obtained above was charged from a regular current source so as to obtain a current density of 1.0 ampere per area (cm²). As a result, a charging voltage was successfully maintained within the range of 4 V to 5.5 V for about 40 hours, as indicated by the upper liner in FIG. 2 (1).

When the operation was switched from the charging process to a discharge process, a discharge state of 4 V to 3.5 V was successfully maintained for about 35 hours, as indicated by the upper liner in FIG. 2 (2).

The charge voltage and discharge voltage after the charge and discharge cycle was repeated 3000 times changed as indicated by the lower lines of FIG. 2 (1) and (2), respectively. It was found that each of the voltages does not decrease at all and furthermore, discharge time only decreases at most by about 5 hours.
In short, it was demonstrated by such a cycle test that the life of the solid type secondary battery of the present invention is extremely long.

In the solid secondary battery of the present invention, if the size and shape of the positive electrode 3 and negative electrode 5 are modified in various ways, it is sufficiently possible that the discharge time is greatly improved than the design shown in Example. If so, the solid secondary battery can be sufficiently used as a power source for e.g., personal computers and mobile phones.

### DESCRIPTION OF SYMBOLS

| | |
|---|---|
| 1 | Substrate |
| 2 | Positive electrode current collecting layer |
| 3 | Positive electrode |
| 4 | Nonaqueous electrolyte |
| 5 | Negative electrode |
| 6 | Negative electrode current collecting layer |

## Claims

1. A solid type secondary battery comprising silicon carbide having a chemical formula of SiC as a positive electrode, silicon nitride having a chemical formula of Si₃N₄ as a negative electrode, and a nonaqueous electrolyte, between the positive electrode and the negative electrode, formed of any one of ion exchange resins of polymers having a cationic sulfonic acid group (-SO₃H), carboxyl group (-COOH), an anionic quaternary ammonium group (-N(CH₃)²C₂H₄OH), or substituted amino group (-NH(CH₃)²) as a binding group, wherein, in charging, a silicon cation (Si⁺) is generated at the positive electrode and a silicon anion (Si⁻) is generated at the negative electrode.

2. A solid type secondary battery comprising silicon carbide having a chemical formula of SiC as a positive electrode, silicon nitride having a chemical formula of Si₃N₄ as a negative electrode, and a nonaqueous electrolyte, between the positive electrode and the negative electrode, formed of an inorganic ion exchange substance of tin chloride (SnCl₃), zirconium magnesium oxide solid solution (ZrMgO₃), zirconium calcium oxide solid solution (ZrCaO₃) , zirconium oxide (zrO₂) , silicon-βalumina (Al₂O₃), monoxide nitrogen silicon carbide (SiCON) or phosphoric acid zirconium silicon (Si₂Zr₂PO), wherein, in charging, a silicon cation (Si⁺) is generated at the positive electrode and a silicon anion (Si⁻) is generated at the negative electrode.

3. The solid type secondary battery according to Claims 1 and 2, wherein silicon carbide and silicon nitride formed into an amorphous film are laminated on a substrate.

4. The solid type secondary battery according to Claim 1, wherein polyacrylamidomethylpropane sulfonic acid (PAMPS) is employed as the ion exchange resin.

5. The solid type secondary battery according to Claim 1 or 4, wherein, a polymer alloy having a crystal structure and formed by blending the ion exchange resin (polymer) and another crystalline polymer is employed as the nonaqueous electrolyte.

6. The solid type secondary battery according to Claim 5, wherein atactic polystyrene (AA), acrylonitrile-styrene copolymer (AS) or atactic polystyrene-acrylonitrile-styrene copolymer (AA-AS) is employed as the crystalline polymer.

7. A method for manufacturing the solid type silicon ion secondary battery according to Claim 1, 2, 3, 4, 5 or 6, the method comprising the steps of:
(1) forming a positive electrode current collecting layer by sputtering a metal on a substrate,
(2) forming a positive electrode layer by vacuum vapor deposition of silicon carbide (SiC) on the positive electrode current collecting layer,
(3) forming a nonaqueous electrolyte layer by coating of the positive electrode layer obtained in said step (2),
(4) forming a negative electrode layer by vacuum vapor deposition of silicon nitride (Si₃N₄) on the nonaqueous electrolyte layer obtained in said step (3), and
(5) forming a negative electrode current collecting layer by sputtering a metal.
